# FASCICULE DE BREVET EUROPEEN

(11) **EP 2 870 390 B1**
(45) Date de publication et mention de la délivrance du brevet: **17.08.2016**
(21) Numéro de dépôt: 13739760.0
(22) Date de dépôt: 01.07.2013
(51) Int. Cl.: F16K 1/226, F16K 11/052, F16K 1/20, F02M 26/00

(54) **VANNE DE CONTROLE MOTEUR A FONCTIONNEMENT AMELIORE**
MOTORSTEUERUNGSVENTIL MIT VERBESSERTEM BETRIEB
ENGINE CONTROL VALVE WITH IMPROVED OPERATION

(30) Priorité: 04.07.2012 FR 1256392
(43) Date de publication de la demande: 13.05.2015
(73) Titulaire: Valeo Systèmes de Contrôle Moteur, 95800 Cergy (FR)
(72) Inventeur: HODEBOURG, Gregory, F-78500 Sartrouville (FR)
(74) Mandataire: Garcia, Christine
(86) Numéro de dépôt international: PCT/FR2013/051537
(87) Numéro de publication internationale: WO 2014/006312

(56) Documents cités:
- WO-A1-2012/001284
- DE-A1- 19 718 862
- US-A1- 2009 212 448
- US-A1- 2010 148 107

## Description

L'invention se rapporte à une vanne de contrôle moteur à fonctionnement amélioré.

Ce type de vanne peut, par exemple, équiper un circuit d'alimentation en gaz d'un moteur thermique de véhicule, pour réguler le débit des gaz EGR (Exhaust Gas Recirculation) dans une boucle permettant de ponctionner une partie des gaz d'échappement en sortie de moteur, pour les réinjecter en amont dudit moteur. Le principe de fonctionnement de ce type de vanne repose sur la rotation commandée d'un volet, pouvant passer d'une position d'ouverture complète pour laisser passer le fluide, à une position de fermeture pour bloquer ce passage. L'invention a pour objet une vanne de contrôle moteur à fonctionnement amélioré.

Une vanne de contrôle moteur possède donc un volet, qui est monté pivotant sur un axe de rotation. Le volet peut comprendre une première partie et une deuxième partie séparées par l'axe de rotation. Lorsque ce volet se retrouve dans une position de fermeture, il vient au contact d'un joint solidaire du corps de la vanne, ledit joint assurant l'étanchéité de la vanne en agissant alors comme une butée de positionnement dudit volet. Plus spécifiquement, le joint est généralement globalement plan, et est fixé dans le corps de la vanne, en étant inséré au niveau de son pourtour entre deux éléments de fonderie dudit corps. Le joint possède une ouverture, et lorsque le volet est en position de fermeture, la première partie du volet vient au contact de l'une des deux faces du joint pour obturer ladite ouverture, tandis que la deuxième partie dudit volet vient affleurer l'autre face dudit joint. Le volet est de faible épaisseur et possède généralement une forme sensiblement rectangulaire.

Dans un premier temps, pour des raisons liées à son usinage, le joint ne recouvrait que trois des quatre arêtes périphériques dudit volet, laissant subsister un passage potentiel pour les gaz au niveau de la quatrième arête du volet, qui est non recouverte par ledit joint. Ainsi, lorsque le volet est en position de fermeture contre le joint, ledit passage est susceptible de favoriser une fuite inopinée des gaz. Il en résulte une étanchéité assez médiocre de ladite vanne en configuration de fermeture.

Dans un deuxième temps, une solution pour remédier à cette étanchéité de mauvaise qualité a consisté à fabriquer un joint, soit en une seule partie, soit en deux parties, qui est suffisamment étendu pour recouvrir pleinement les quatre arêtes périphériques du volet, et ainsi limiter les sources de fuite.

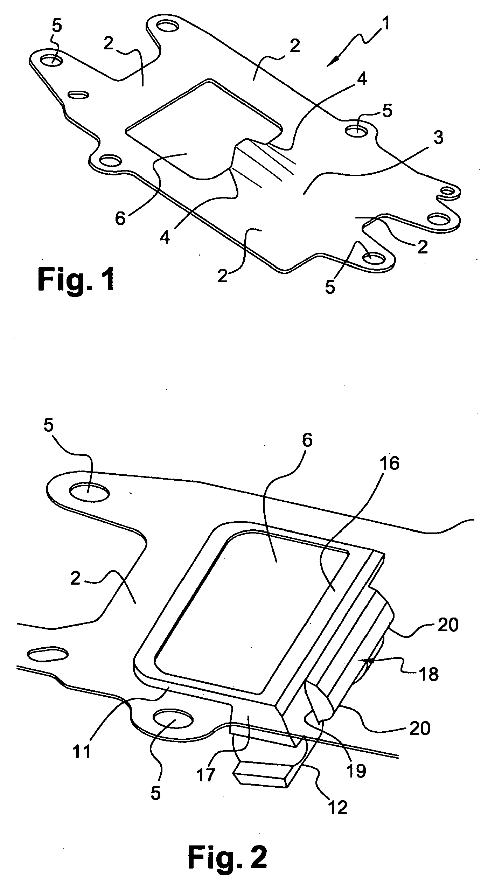

Or, en se référant à la figure 1, un problème régulièrement rencontré avec ce type de joint 1 étendu est qu'il est soumis à la fois à une pression et une température élevées de la part des gaz présents dans la vanne, et qu'il va donc avoir tendance à se déformer sous l'effet d'une dilatation thermique. Puisqu'il est inséré au niveau de son bord externe 2, entre deux éléments de fonderie, la déformation va essentiellement se porter sur la partie centrale 3 du joint 1, avec la création de creux 4 et/ou de bosses, susceptibles de constituer des passages de fuite pour les gaz situés dans la vanne. De plus, dans le cas où le joint 1 se déforme en créant des creux 4, il risque de constituer une butée de blocage artificielle pour le volet, et donc d'entraver son pivotement pour venir au contact dudit joint 1, afin d'assurer la fermeture de la vanne. Autrement dit, la déformation du joint risque d'entraver le mécanisme de fonctionnement de la vanne.

On connaît de la demande DE 197 18 862 une vanne avec un volet pivotant présentant une portion d'extrémité arrondie apte à venir obturer une ouverture d'un joint lorsque la vanne est fermée tout en appuyant sur le joint. De plus, WO 2012/ 001284 décrit une vanne selon le préamble de la revendication 1.

L'invention a pour objet, selon l'un de ses aspects, une vanne de contrôle moteur, présentant un corps délimitant un conduit interne et comprenant un volet monté pivotant par un axe du volet, le volet comprenant une première partie, ledit volet étant apte à pivoter entre une position d'ouverture permettant le passage de gaz dans le conduit, et une position de fermeture pour laquelle le volet vient en contact avec un joint, notamment plan, solidaire du corps de la vanne, ledit joint présentant un contour extérieur entourant extérieurement le contour extérieur du volet, le joint comprenant une ouverture et une portion pleine, ladite première partie venant obturer l'ouverture du joint lorsque le volet est dans une position de fermeture,
le volet comprenant un renflement positionné de manière à demeurer au contact de la portion pleine du joint lorsque le volet pivote entre une position d'ouverture et une position de fermeture ou inversement.

Le renflement est distinct de la première partie du volet, c'est-à-dire que le renflement n'obture pas l'ouverture du joint lorsque le volet est dans la position de fermeture, cette obturation étant assurée par la première partie du volet.

Le renflement est avantageusement positionné sur le volet de manière à servir de soutien à la portion pleine du joint. En effet, le joint est généralement inséré au niveau de son bord périphérique entre deux éléments de fonderie du corps de la vanne. La partie centrale du joint constitue alors une zone de faiblesse structurelle, susceptible de se déformer sous l'effet de la température et de la pression élevées de gaz qui circulent dans ladite vanne, avec pour conséquence la création de passages de fuite pour lesdits gaz et un blocage éventuel en rotation dudit volet. Le renflement peut servir de soutien permanent à la partie centrale du joint, en demeurant au contact de la portion pleine du joint, notamment pendant le pivotement complet du volet pour passer d'une position de fermeture à une position d'ouverture, ou inversement. Ce renflement peut agir comme une butée de contact destinée à empêcher, de préférence à tout instant de la rotation du volet, une quelconque déformation de la portion pleine du joint. Un tel renflement permet de préserver l'intégrité géométrique du joint, et donc d'assurer un bon fonctionnement de la vanne ainsi qu'une bonne étanchéité de celle-ci. Ce renflement peut être constituée par une pièce rapportée venant se fixer au volet, ou bien peut constituer avec ledit volet une seule et même pièce fabriquée en une seule opération.

Le renflement peut être au contact de la portion pleine du joint lorsque le volet est dans la position de fermeture et/ou lorsque le volet est dans la position d'ouverture.

Ainsi :
- dans la position de fermeture du volet, la première partie du volet peut obturer l'ouverture du joint tandis que le renflement est au contact de la portion pleine du joint, et
- dans la position d'ouverture du volet, la première partie du volet n'obture pas l'ouverture du joint tandis que le renflement peut être au contact de la portion pleine du joint.

Le renflement peut être dimensionné au plus juste, de manière à demeurer au contact de la portion pleine du joint, sans alourdir ou encombrer le volet.

Selon une variante de réalisation, le renflement est déformable pour assurer un contact étroit avec le joint. Le contact entre le renflement et la portion pleine du joint peut être homogène et uniforme durant toute la rotation du volet, ce qui signifie que ledit renflement ne se rapproche ni ne s'écarte de ladite portion pleine durant le mouvement rotatif du volet. Lorsque le volet pivote, le renflement pivote également, de préférence en se maintenant au contact de la zone de la portion pleine du joint qui est la plus susceptible de se déformer.

Le volet peut comprendre une deuxième partie séparée de la première partie par l'axe du volet, ladite deuxième partie venant affleurer la portion pleine lorsque le volet est dans une position de fermeture, le renflement étant placé entre la deuxième partie du volet et l'axe du volet.

Avantageusement, le renflement présente un axe longitudinal parallèle à l'axe de rotation.

Le renflement peut saillir vers la deuxième partie du volet, et ledit renflement peut ménager un espace avec ladite deuxième partie. Le volet peut schématiquement être représenté par deux parties alignées et un bras de levier portant un axe de rotation décalé par rapport auxdites parties. Le renflement peut être assimilable à une bosse s'étendant le long de l'axe de rotation en étant insérée entre ledit axe et la deuxième partie du volet. L'espace ménagé entre le renflement et la deuxième partie du volet est dédié à l'insertion de la portion pleine du joint.

De façon préférentielle, la section transversale du renflement est délimitée par un segment rectiligne et par un segment incurvé dont les deux extrémités joignent les deux extrémités dudit segment rectiligne. Le segment rectiligne correspond à l'embase du renflement par laquelle ledit renflement est sur le volet, et le segment arrondi correspond à la surface externe du renflement qui saille dudit volet.

Selon un mode de réalisation préféré d'une vanne selon l'invention, le renflement est hémicylindrique. Il s'agit du cas particulier pour lequel le segment incurvé délimite un demi-cercle, c'est-à-dire que le renflement est arrondi.

Préférentiellement, le volet est placé dans la vanne de sorte, qu'en section transversale, le segment incurvé du renflement soit au contact de la portion pleine du joint, une rotation du volet autour de son axe entraînant un déplacement relatif du renflement par rapport à ladite portion pleine du joint, tout en maintenant ladite portion pleine au contact dudit segment incurvé du renflement. Par ce biais, le renflement assure un maintien permanent de la partie pleine du joint durant la rotation complète du volet.

De façon avantageuse, le renflement s'étend sur au moins la moitié de la largeur du volet, qui est sa dimension prise le long de l'axe de rotation. Ce renflement doit pouvoir assurer sa fonction de soutien de la portion pleine du joint, tout en demeurant d'un encombrement le plus réduit possible.

Avantageusement, la zone de la portion pleine du joint, qui est au contact du renflement, est une zone de ladite portion qui borde l'ouverture dudit joint. En effet, la zone de la portion pleine du joint qui est la plus exposée à une déformation est la zone qui borde l'ouverture dudit joint. Le renflement est placé au sein dudit volet pour soutenir cette zone sensible.

De façon préférentielle, les deux parties du volet sont planes et en continuité l'une de l'autre, la première partie du volet étant au contact d'une face du joint pour obturer l'ouverture, et la deuxième partie dudit volet affleurant la face opposée dudit joint au niveau de sa portion pleine.

Selon un autre mode de réalisation préféré d'une vanne selon l'invention, le renflement comprend au moins deux parties alignées le long de l'axe de rotation du volet. En effet, il n'est pas nécessaire que le renflement soit continu. Le renflement peut être équitablement réparti sur le volet, pour pouvoir soutenir efficacement la portion pleine du joint.

Dans tout ce qui précède, le joint peut être plan, c'est-à-dire que les faces opposées du joint peuvent chacune appartenir exclusivement à un plan donné.

En variante, seule une partie du joint peut être plane.

L'invention a pour deuxième objet un volet pour la réalisation d'une vanne selon l'invention.

Les vannes selon l'invention présentent l'avantage d'être performantes en matière de fonctionnement, en empêchant de façon simple et judicieuse la déformation du joint, sans notamment avoir recours à un réaménagement en profondeur de leur corps. Lesdites vannes ont de plus l'avantage de demeurer d'un encombrement constant par rapport aux vannes déjà existantes, puisqu'elles ne nécessitent aucun ajout de pièces supplémentaires pour garantir leur bon fonctionnement. Les vannes selon l'invention ont enfin l'avantage de présenter une certaine modularité, car le renflement du volet peut adopter une taille et une géométrie appropriées, en fonction de la configuration interne desdites vannes et du niveau de sollicitation que pourraient engendrer les gaz présents dans ces vannes.

On donne ci-après, une description détaillée d'un mode de réalisation préféré d'une vanne selon l'invention, en se référant aux dessins annexés sur lesquels :
La figure 1 est une vue filaire d'un joint déformé de l'état de la technique,
La figure 2 est une vue partielle d'un volet et d'un joint d'une vanne selon l'invention. Sur cette vue, le joint apparait transparent pour illustrer son agencement avec le volet,
La figure 3a est une vue schématique en coupe d'un joint et d'un volet selon l'invention, ledit volet étant dans une position de fermeture, et
La figure 3b est une vue schématique en coupe d'un joint et d'un volet selon l'invention, ledit volet étant dans une position d'ouverture.

Une vanne de contrôle moteur selon l'invention peut par exemple être une vanne EGR (de l'anglais Exhaust Gas Recirculation), régulant le débit des gaz dans une boucle reliant un circuit d'échappement à un circuit d'admission d'air d'un moteur thermique de véhicule.

En se référant à la figure 1, un joint 1 de l'état de la technique est en inox rigide, et est inséré au niveau de son bord périphérique 2, entre deux éléments de fonderie du corps de ladite vanne 1. Les deux éléments de fonderie sont par exemple en aluminium. En variante, l'un des éléments de fonderie peut être en aluminium tandis que l'autre élément de fonderie est en fonte ou en inox. Ce bord périphérique 2 comporte ainsi un certain nombre d'orifices 5, destinés à être traversés par des vis pour fixer le joint 1 entre lesdits éléments de fonderie. Ce joint 1 est plan, de forme sensiblement rectangulaire et de faible épaisseur, et possède une portion pleine 3 et une ouverture 6 de passage pour les gaz.

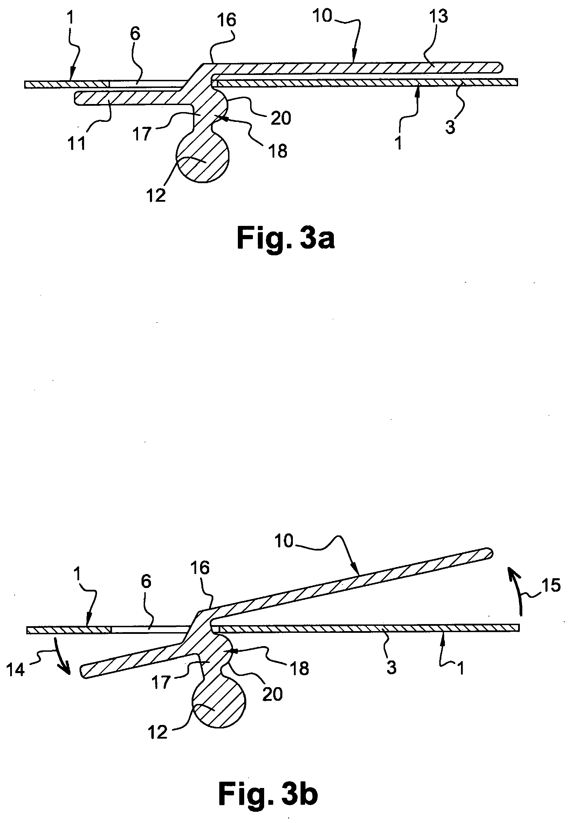

En se référant aux figures 2, 3a et 3b, une vanne selon un exemple de mise en oeuvre de l'invention comprend un conduit interne et fonctionne avec un volet 10 mobile en rotation, entre une position de complète ouverture, pour laquelle il permet le passage des gaz dans le conduit avec un débit maximal, et une position de fermeture pour laquelle il obture entièrement ledit conduit. Le volet 10 est globalement rectangulaire et comporte une première 11 et une deuxième partie 13 rectangulaires, situées de part et d'autre d'un axe 12 de rotation, lesdites parties 11 étant planes, en parfaite continuité l'une de l'autre, et étant fixées l'une à l'autre de façon rigide. De façon plus précise, la première partie 10 et la deuxième partie 13 se rejoignent au niveau d'un plan d'interface 16, ledit volet 10 étant doté d'un bras de levier 17 prenant naissance au niveau dudit plan d'interface 16 et se terminant par l'axe de rotation 12. Ce bras de levier 17 est sensiblement perpendiculaire au plan du volet 10 constitué par la première 10 et la deuxième 13 parties. Il est à préciser que le joint présenté à la figure 2 est volontairement transparent, même si cela n'a pas de réalité physique puisqu'il est constitué généralement mais non nécessairement par de l'inox, de façon à montrer son positionnement par rapport au volet 10.

En se référant à la figure 3a, le volet 10 décrit est monté en rotation dans la vanne, de manière à ce que, en position de fermeture, la première partie 11 du volet 10 obture l'ouverture 6 en venant au contact d'une face dudit joint 1, et de manière à ce que la deuxième partie 13 du volet 10 affleure la face opposée dudit joint 1 au niveau de la portion pleine 3. L'axe de rotation 12 du volet 10 est placé au droit de l'ouverture 6 du joint 1, au niveau de la zone de ladite ouverture 6 la plus proche de la zone pleine 3 du joint 1. En se référant à la figure 3b, lorsque le volet 10 s'ouvre pour laisser passer les gaz, les deux parties 11,13 pivotent simultanément dans le sens indiqué par les deux flèches 14,15 pour s'écarter de la face du joint 1 contre laquelle elles étaient en appui ou en affleurement. Dans cette configuration, la première partie 11 du volet 10 libère l'ouverture 6 du joint 10, pour assurer le passage des gaz dans le conduit. Il est à noter que la rotation du volet 10 est commandée, et qu'il peut être figé dans une multiplicité de positions intermédiaires situées entre la position de fermeture et la position de complète ouverture.

En se référant à la figure 1, le joint 1 d'une vanne selon l'exemple décrit de mise en oeuvre de l'invention est réalisé en une seule pièce, et est étendu de manière à pouvoir recouvrir les quatre arêtes périphériques du volet 10. Lorsque ce joint 1 n'est pas maintenu, il possède une zone centrale structurellement faible, qui est susceptible de se déformer sous l'effet conjugué de la pression et de la température élevées des gaz. En effet, puisque le joint 1 est fixé à sa périphérie 2, seule sa partie centrale, qui n'est pas bridée en mouvement, va subir les effets d'une dilatation thermique. Cette déformation peut conduire le joint 1 à se gondoler, en créant des creux 4 au niveau de la partie pleine 3 bordant l'ouverture 6. Or, un joint 1 déformé présentant des creux 4 peut venir entraver le mécanisme de rotation du volet 10 dans la vanne, en venant en appui contre ledit volet 10 et en bloquant sa rotation.

En se référant aux figures 2, 3a, et 3b, le volet 10 de la vanne selon l'exemple décrit permet d'éviter une déformation de ce joint 1, en étant doté d'un renflement 18 allongé, implanté sur le bras de levier 17 du volet 10, de manière à ce que son axe longitudinal s'étende parallèlement à l'axe de rotation 12 du volet 10. Ce renflement 18 est positionné entre la deuxième partie 13 du volet 10 et l'axe de rotation 12, et saille du bras de levier 17 en direction de la deuxième partie 13 du volet 10. Ce renflement 18 ménage avec la deuxième partie 13 du volet 10 un espace libre destiné à être occupé par la portion pleine 3 du joint 1. La section transversale de ce renflement 18 présente un segment rectiligne 19 et un segment incurvé 20, dont les deux extrémités joignent les deux extrémités dudit segment rectiligne 19. Le segment rectiligne 19 correspond à l'embase du renflement 18 par laquelle ledit renflement 18 est implanté sur le bras de levier 17, et le segment arrondi 20 correspond à la surface externe de la partie arrondie du renflement 18, qui saille dudit bras de levier 17 parallèlement à la deuxième partie 13 du volet.

En se référant à la figure 3a, le renflement 18 est placé sur le bras de levier 17 et est dimensionné de telle sorte qu'il puisse soutenir la zone de la portion pleine 3 du joint 1, qui borde l'ouverture 6 dudit joint 1. Plus exactement, c'est l'extrémité de la portion pleine 3 du joint 1 délimitant l'ouverture 6, qui vient au contact de la surface externe arrondie 20 du renflement 18.

En se référant à la figure 3b, lorsque le volet 10 pivote autour de son axe de rotation 12 dans le sens indiqué par les deux flèches 14,15 pour s'ouvrir, le renflement 18 pivote également, mais en demeurant au contact de la portion pleine 3 du joint 1. En effet, la partie arrondie 20 du renflement 18 selon l'exemple décrit est conçue pour permettre d'assurer un contact homogène et constant avec la portion pleine 3 du joint 1 durant la totalité du mouvement en rotation du volet 10. Autrement dit, le renflement 18 représenté ne se rapproche ni ne s'éloigne de la portion pleine 3 du joint 1 pendant la rotation du volet 10. De cette manière, le renflement 18 du volet 10 représenté agit comme une butée de soutien de la portion pleine 3 du joint 1 durant les mouvements en rotation du volet 10 pour passer d'une position de fermeture à une position d'ouverture, et inversement. Ce renflement 18 empêche le joint 1 de se déformer par dilatation thermique et contribue à préserver des conditions de fonctionnement satisfaisantes de la vanne, même en présence de gaz chauds sous pression.

## Revendications

1. Vanne de contrôle moteur, présentant un corps délimitant un conduit interne et comprenant un volet (10) monté pivotant par un axe (12) du volet (10), le volet (10) comprenant une première partie (11) et étant apte à pivoter entre une position d'ouverture permettant le passage de gaz dans le conduit, et une position de fermeture pour laquelle le volet (10) vient en contact avec un joint (1) solidaire du corps de la vanne, ledit joint (1) présentant un contour extérieur entourant extérieurement le contour extérieur du volet (10), le joint (1) comprenant une ouverture (6) et une portion pleine (3), ladite première partie (11) venant obturer l'ouverture (6) du joint (1) lorsque le volet (10) est dans une position de fermeture, **caracterisée en ce que** le volet (10) comprend un renflement (18) distinct de la première partie (11) du volet (10) et positionné de manière à demeurer au contact de la portion pleine (3) du joint (1) lorsque le volet (10) pivote entre une position d'ouverture et une position de fermeture ou inversement.

2. Vanne selon la revendication 1, le volet (10) comprenant une deuxième partie (13) séparée de la première partie (11) par l'axe (12) du volet (10), ladite deuxième partie venant affleurer la portion pleine (3) lorsque le volet est dans une position de fermeture, le renflement (18) étant placé entre la deuxième partie (13) du volet (10) et l'axe (12) du volet (10).

3. Vanne selon la revendication 1 ou 2, le renflement (18) présentant un axe longitudinal parallèle à l'axe de rotation (12).

4. Vanne selon les revendications 2 et 3, le renflement (18) saillant vers la deuxième partie (13) du volet (10), et ledit renflement (18) ménageant un espace avec ladite deuxième partie (13).

5. Vanne selon la revendication 3 ou 4, l'axe longitudinal du renflement (18) étant parallèle à l'axe de rotation (12), et la section transversale dudit renflement (18) étant délimitée par un segment rectiligne (19) et un segment incurvé (20) dont les deux extrémités joignent les deux extrémités dudit segment rectiligne (19).

6. Vanne selon la revendication 5, le renflement (18) étant hémicylindrique.

7. Vanne selon l'une quelconque des revendications 5 ou 6, le volet (10) étant placé dans la vanne de sorte, qu'en section transversale, le segment incurvé (20) du renflement (18) soit au contact de la portion pleine (3) du joint (1), une rotation du volet (10) autour de son axe (12) entraînant un déplacement relatif du renflement (18) par rapport à ladite portion pleine (3) du joint (1), tout en maintenant ladite portion pleine (3) au contact dudit segment incurvé (20).

8. Vanne selon l'une quelconque des revendications 3 à 7, le renflement (18) s'étendant sur au moins la moitié de la largeur du volet (10), qui est sa dimension prise le long de l'axe de rotation (12).

9. Vanne selon l'une quelconque des revendications 1 à 8, la zone de la portion pleine (3) du joint (1) qui est au contact du renflement (18) étant une zone de ladite portion (3) qui borde l'ouverture (6) dudit joint (1).

10. Vanne selon la revendication 2 et l'une quelconque des revendications précédentes, les deux parties (11,13) du volet (10) étant planes et en continuité l'une de l'autre, la première partie (11) du volet (10) étant au contact d'une face du joint (1) pour obturer l'ouverture (6), et la deuxième partie (13) dudit volet (10) affleurant la face opposée dudit joint (1) au niveau de sa portion pleine (3).

11. Vanne selon l'une quelconque des revendications précédentes, le renflement (18) comprenant au moins deux parties alignées le long de l'axe de rotation du volet (10).

12. Vanne selon l'une quelconque des revendications précédentes, le joint (1) étant plan.

## Patentansprüche

1. Kraftmaschinensteuerventil, das einen Körper aufweist, der eine innere Leitung begrenzt, und eine Klappe (10) umfasst, die um eine Welle (12) der Klappe (10) schwenkbar montiert ist, wobei die Klappe (10) einen ersten Teil (11) aufweist und zwischen einer geöffneten Position, die den Durchgang von Gas in der Leitung ermöglicht, und einer geschlossenen Position, in der die Klappe (10) mit einer mit dem Körper des Ventils fest verbundenen Dichtung (1) in Kontakt ist, schwenken kann, wobei die Dichtung (1) einen äußeren Umriss aufweist, der den äußeren Umfang der Klappe (10) außen umgibt, wobei die Dichtung (1) eine Öffnung (6) und einen Vollabschnitt (3) aufweist, wobei der erste Teil (11) die Öffnung (6) der Dichtung (1) verschließt, wenn die Klappe (10) in einer geschlossenen Position ist, **dadurch gekennzeichnet, dass**
die Klappe (10) eine von dem ersten Teil (11) der Klappe (10) verschiedene Verdickung (18) umfasst, die in der Weise positioniert ist, dass sie mit dem Vollabschnitt (3) der Dichtung (1) in Kontakt bleibt, wenn die Klappe (10) zwischen einer geöffneten Position und einer geschlossenen Position oder umgekehrt schwenkt.

2. Ventil nach Anspruch 1, wobei die Klappe (10) einen zweiten Teil (13) umfasst, der von dem ersten Teil (11) durch die Welle (12) der Klappe (10) getrennt ist, wobei der zweite Teil mit dem Vollabschnitt (3) bündig ist, wenn die Klappe in einer geschlossenen Position ist, wobei die Verdickung (18) zwischen dem zweiten Teil (13) der Klappe (10) und der Welle (12) der Klappe (10) angeordnet ist.

3. Ventil nach Anspruch 1 oder 2, wobei die Verdickung (18) eine Längsachse aufweist, die zu der Drehwelle (12) parallel ist.

4. Ventil nach den Ansprüchen 2 und 3, wobei die Verdickung (18) zu dem zweiten Teil (13) der Klappe (10) vorsteht und wobei die Verdickung (18) mit dem zweiten Teil (13) einen Raum bereitstellt.

5. Ventil nach Anspruch 3 oder 4, wobei die Längsachse der Verdickung (18) zu der Drehwelle (12) parallel ist und wobei der Querschnitt der Verdickung (18) durch ein geradliniges Segment (19) und ein gekrümmtes Segment (20), dessen zwei Enden mit den zwei Enden des geradlinigen Segments (19) verbunden sind, begrenzt ist.

6. Ventil nach Anspruch 5, wobei die Verdickung (18) halbzylindrisch ist.

7. Ventil nach einem der Ansprüche 5 oder 6, wobei die Klappe (10) in dem Ventil in der Weise angeordnet ist, dass im Querschnitt das gekrümmte Segment (20) der Verdickung (18) mit dem Vollabschnitt (3) der Dichtung (1) in Kontakt ist, wobei eine Drehung der Klappe (10) um ihre Welle (12) eine relative Verlagerung der Verdickung (18) in Bezug auf den Vollabschnitt (3) der Dichtung (1) bewirkt und dabei der Vollabschnitt (3) mit dem gekrümmten Segment (20) in Kontakt gehalten wird.

8. Ventil nach einem der Ansprüche 3 bis 7, wobei sich die Verdickung (18) wenigstens über die Hälfte der Breite der Klappe (10), die ihre Abmessung längs der Drehwelle (12) ist, erstreckt.

9. Ventil nach einem der Ansprüche 1 bis 8, wobei die Zone des Vollabschnitts (3) der Dichtung (1), die mit der Verdickung (18) in Kontakt ist, eine Zone des Abschnitts (3) ist, die an die Öffnung (6) der Dichtung (1) angrenzt.

10. Ventil nach Anspruch 2 oder einem der vorhergehenden Ansprüche, wobei die zwei Teile (11, 13) der Klappe (10) eben sind und ineinander übergehen, wobei der erste Teil (11) der Klappe (10) mit einer Fläche der Dichtung (1) in Kontakt ist, um die Öffnung (6) zu verschließen, und wobei der zweite Teil (13) der Klappe (10) mit der gegenüberliegenden Fläche der Dichtung (1) auf Höhe ihres Vollabschnitts (3) bündig ist.

11. Ventil nach einem der vorhergehenden Ansprüche, wobei die Verdickung (18) wenigstens zwei Teile umfasst, die auf die Drehwelle der Klappe (10) ausgerichtet sind.

12. Ventil nach einem der vorhergehenden Ansprüche, wobei die Dichtung (1) eben ist.

## Claims

1. Engine control valve having a body that delimits an internal duct and comprising a flap (10) mounted in a pivoting manner by way of a pin (12) of the flap (10), the flap (10) comprising a first part (11) and being able to pivot between an open position allowing gas to pass through the duct and a closed position in which the flap (10) comes into contact with a gasket (1) secured to the body of the valve, said gasket (1) having an external contour that externally surrounds the external contour of the flap (10), said gasket (1) comprising an opening (6) and a solid portion (3), said first part (11) closing off the opening (6) in the gasket (1) when the flap (10) is in a closed position, **characterized in that**
the flap (10) comprises a bulge (18) separate from the
first part (11) of the valve (10) and positioned so as to remain in contact with the solid portion (3) of the gasket (1) when the flap (10) pivots between an open position and a closed position or vice versa.

2. Valve according to Claim 1, wherein the flap (10) comprises a second part (13) that is separated from the first part (11) by the pin (12) of the flap (10), said second part being flush with the solid portion (3) when the flap is in a closed position, the bulge (18) being positioned between the second part (13) of the flap (10) and the pin (12) of the flap (10).

3. Valve according to Claim 1 or 2, wherein the bulge (18) has a longitudinal axis parallel to the rotary pin (12).

4. Valve according to Claims 2 and 3, wherein the bulge (18) protrudes toward the second part (13) of the flap (10), and said bulge (18) forms a space with said second part (13).

5. Valve according to Claim 3 or 4, wherein the longitudinal axis of the bulge (18) is parallel to the rotary pin (12), and the cross section of said bulge (18) is delimited by a rectilinear segment (19) and a curved segment (20), the two ends of which join the two ends of said rectilinear segment (19).

6. Valve according to Claim 5, wherein the bulge (18) is in the form of a half cylinder.

7. Valve according to either of Claims 5 and 6, wherein the flap (10) is positioned in the valve such that, in cross section, the curved segment (20) of the bulge (18) is in contact with the solid portion (3) of the gasket (1), a rotation of the flap (10) about its pin (12) causing a relative movement of the bulge (18) with respect to said solid portion (3) of the gasket (1), while keeping said solid portion (3) in contact with said curved segment (20).

8. Valve according to any one of Claims 3 to 7, wherein the bulge (18) extends over at least half the width of the flap (10), which is its dimension taken along the rotary pin (12).

9. Valve according to any one of Claims 1 to 8, wherein the region of the solid portion (3) of the gasket (1) which is in contact with the bulge (18) is a region of said portion (3) which borders the opening (6) in said gasket (1).

10. Valve according to Claim 2 and any one of the preceding claims, wherein the two parts (11, 13) of the flap (10) are flat and in continuity of one another, the first part (11) of the flap (10) being in contact with one face of the gasket (1) in order to close off the opening (6), and the second part (13) of said flap (10) being flush with the opposite face of said gasket (1) at the solid portion (3) thereof.

11. Valve according to any one of the preceding claims, wherein the bulge (18) comprises at least two parts that are aligned along the rotary pin of the flap (10).

12. Valve according to any one of the preceding claims, wherein the gasket (1) is flat.
